Europäisches Patentamt

European Patent Office

Office européen des brevets

(19)

(11) **EP 1 148 675 A1**

(12) **EUROPEAN PATENT APPLICATION**
published in accordance with Art. 158(3) EPC

(43) Date of publication:
**24.10.2001 Bulletin 2001/43**

(21) Application number: **00901982.9**

(22) Date of filing: **28.01.2000**

(51) Int Cl.[7]: **H04L 9/30**, H04L 9/08,
G09C 1/00

(86) International application number:
**PCT/JP00/00475**

(87) International publication number:
**WO 00/45548 (03.08.2000 Gazette 2000/31)**

(84) Designated Contracting States:
**AT BE CH CY DE DK ES FI FR GB GR IE IT LI LU MC NL PT SE**

(30) Priority: **29.01.1999 JP 2125499**
**26.08.1999 JP 23917799**

(71) Applicant: **Hitachi, Ltd.**
**Chiyoda-ku, Tokyo 101-8010 (JP)**

(72) Inventor: **NISHIOKA, Mototsugu**
**Asao-ku, Kawasaki-shi, Kanagawa 215-0013 (JP)**

(74) Representative: **Strehl Schübel-Hopf & Partner**
**Maximilianstrasse 54**
**80538 München (DE)**

(54) **PUBLIC KEY CRYPTOGRAPH AND KEY SHARING METHOD**

(57) A method for cryptographic communications by public-key encryption is disclosed in which a sender generates a ciphertext, using a public key of a receiver, by the internal operation of the sender-end device 100, and transmits the ciphertext to the receiver-end device 200 over a network 300 and the receiver decrypts the ciphertext with the receiver's secret key. In accordance with this method, the procedures for encryption and decryption are set up, providing for both security features of the Rabin's Cryptosystem and the ElGamal's Cryptosystem. The feature of the former is one-way against chosen plaintext attacks, presupposing the difficulty of solving the problem of factorization into prime factors; the feature of the latter is indistinguishability, namely strong protection of secrecy against chosen plaintext attacks, presupposing the difficulty of solving the Diffie-Hallman decision problem. Moreover, with the aim of using a common key cryptogram for key distribution, the size of plaintext space is reduced, while true plaintext space keeping secret. In this way, a public-key encryption method that can prove security, presupposing that the underlying problem is more difficult to solve than the problems employed in the previous cryptosystems, and that enables highly efficient processing in the calculation for encryption/decryption as well as a key-sharing method based on the above method are provided.

FIG.1

**Description**

Background Art

The present invention relates to a method for cryptographic communications using public-key cryptography and a key-sharing method.

Diverse public-key cryptosystems have been proposed heretofore. Among them, the most famous and most practically used public-key cryptography is the method set forth in the following document:

- Reference document 1 "R. L. Rivest, A. Sharmir, L. Adleman: A method for obtaining digital signatures and public-key cryptosystems, Commun. of the ACM, Vol. 21, No. 2, pp. 120-126, 1978"

Other methods using elliptic curves are known as efficient public-key cryptosystems, which are described in the following documents:

- Reference document 2 "V. S. Miller: Use of Elliptic Curves in Cryptography, Proc. of Crypto'85, LNCS218, Springer-Verlag, pp. 417-426 (1985)"
- Reference document 3 "N. Koblitz: Elliptic Curve Cryptosystems, Math. Comp., 48, 177, pp. 203-209 (1987)"

Further, there is known cryptography providing for provable security against chosen plaintext attacks such as:

- Cryptography described in reference document 4 "M. O. Rabin: Digital Signatures and Public-Key Encryptions as Intractable as Factorization, MIT, Technical Report, MIT/LCS/TR-212 (1979)"
- Cryptography described in reference document 5 "T. ElGamal: A Public Key Cryptosystem and a Signature Scheme Based on Discrete Logarithms, IEEE Trans. On Information Theory, IT-31, 4, pp. 469-472 (1985)"
- Cryptography described in reference document 6 "S. Goldwasser: Probabilistic Encryption, JCSS, 28, 2, pp. 270-299 (1984)"
- Cryptography described in reference document 7 "M. Blum and S. Goldwasser: An efficient probabilistic public-key encryption scheme which hides all partial information, Proc. of Crypto'84, LNCS196, Springer-Verlag, pp. 289-299 (1985)"
- Cryptography described in reference document 8 "S. Goldwasser and M. Bellare: Lecture Notes on Cryptography, http:/www-cse. ucsd. edu/users/mihir. (1997)"
- Cryptography described in reference document 9 "T. Okamoto and S. Uchiyama, A New Public-Key Cryptosystem as Secure as Factoring, Proc. of Eurocrypt'98, LNCS1403. Springer Verlag, pp. 308-318 (1998)"

Furthermore, there is known cryptography providing for provable security against chosen ciphertext attacks such as:

- Cryptography described in reference document 10 "D. Dolve, C. Dwork and M. Naor.: Non-malleable cryptography, In 23rd Annual ACM symposium on Theory of Computing, pp. 542-552 (1991)"
- Cryptography described in reference document 11 "M. Naor and M. Yung.: Public-key cryptosystems provably secure against chosen ciphertext attacks, Proc. of STOC, ACM Press, pp. 427-437 (1990)"
- Cryptography described in reference document 12 "M. Bellare and P. Rogaway, Optimal Asymmetric Encryption - How to Encrypt with RSA, Proc. of Eurocrypt' 94, LNCS 950, Springer Verlag, pp. 92-111 (1994)"
- Cryptography described in reference document 13 "R. Cramer and V. Shoup: A Practical Public Key Cryptosystem Provably Secure against Adaptive Chosen Ciphertext Attack, Proc. of Crypt98, LNCS1462; Springer-Verlag, pp. 13-25 (1998)"

Yet further, the equivalency between IND-CCA2 (Indistinguishablility (strong protection of secrecy) against Chosen Ciphertext Attacks Adaptive) and NM-CCA (Non-Malleability against Chosen Ciphertext Attacks Adaptive) is set forth in:

- Reference document 14 "M. Bellare, A. Desai, D. Pointcheval and P. Rogaway: Relations Among Notions of Security for Public-Key Encryption Schemes, Proc. of Cypto'98 LNCS1462, Springer Verlag, pp. 29-45 (1998)."
At the present, public-key cryptograms satisfying this equivalency requirement is considered the most secure.

The security of the cryptography disclosed in the reference document 1 is based on the assumption that a problem of factorization into prime numbers is difficult to solve, but the above equivalency is not discussed in this document. If the problem of factorization into prime numbers can be solved, then the cryptography of reference document 1 can be broken; however, it is not proven that the reverse is also true. There remains a possibility that the cryptography of reference document 1 be broken by solving a simpler problem than the problem of factorization into prime numbers.

Moreover, because the cryptography of reference document 1 generates fixed cipher, encrypting a plaintext with the same key always generates the same ciphertext. If this cryptography is used as is, by detecting the sameness of a plurality of ciphertexts, it is knowable that the ciphertexts have been encrypted from the same original plaintext. To prevent this, another processing, that is, adding random number data to a ciphertext is required when such cryptography is practically used and this is disadvantageous in terms of efficiency.

In contrast to this cryptography, for the cryptography disclosed in the reference document 9, it is proven that the possibility of breaking a ciphertext by a passive attack and recovering its original plaintext (complete deciphering) is equivalent to the difficulty of solving a problem of factorization into prime numbers, which assures security. Moreover, because of the probabilistic cryptography in which various ciphertexts may be generated from even the same plaintext, the cryptography of reference document 9 is free from the problem involved in the cryptography of reference document 1 and has no need of another processing for protection.

According to the reference document 9, it is argued that semantic security against partial deciphering in the subject cryptography is also assured by reason of its equivalence to the difficulty of solving a p-subgroup problem defined in this document. However, this issue is not yet discussed sufficiently and that difficulty is not known. That is a disputable point. If an algorithm that solves the p-subgroup problem efficiently is found, then the partial deciphering of a ciphertext generated in accordance with the cryptography of reference document 9 can be performed efficiently and the semantic security cannot be assured.

Generally, to assure the security of ciphers, it is desirable to prove that deciphering is equivalent to solving such a problem as factorization into prime numbers or discrete logarithms for which difficult in terms of computational quantity has been argued sufficiently.

The cryptography described in the reference document 13 is such that a ciphertext is generated by using the cryptography described in the reference document 5 and "message information" that someone else cannot create without knowing the original message as was before being encrypted is added to the ciphertext. Mechanism of ciphertext acceptance is as follows: only if this message information matches the received ciphertext, the ciphertext is handled as a valid one; if not, the ciphertext is rejected. The quantity of this message information to be processed is rather great.

Meanwhile, due to the popularization of mobile terminal devices for information processing and the development of network environments, it is anticipated that the opportunity of conducting electric commerce using these mobile terminal devices increases. The computational ability of these small information devices is limited, whereas the devices, if worked for electric commerce, must process a large amount of data for complex protocols of electric commerce. Therefore, reducing the computational load may be preferable to reducing the data amount for encryption.

Disclosure of the Invention

It is an object of the present invention to provide a public-key encryption method for security-provable and highly efficient encryption/decryption processing.

In accordance with the present invention, such a public-key encryption method is provided that OW-CPA (One-Way against Chosen Plaintext Attacks) and IND-CPA (Indistinguishablility (strong protection of secrecy) against Chosen Plaintext Attacks) are provable on the presupposition that the computational complexity of a problem employed in the method is more difficult than previously known cryptography. Based on this method, further, a public-key encryption method that IND-CCA2 or NM-CCA2 is provable is provided.

The encryption method according to the present invention has the following features: the number of modular products that increase computational quantity during encryption/decryption processing is less than the previous cryptographic techniques; and high-speed processing is enabled.

It is other objects of the present invention is to provide an encryption method using a public-key and a decryption method, a key distribution method and a key-sharing method using the above methods, and a program, devices, or a system for implementing these methods, whereby the computational load for both encrypting data to send and decrypting the encrypted data is reduced and high-speed processing is enabled even if these methods are applied to devices with limited computational ability such as mobile terminal devices for information processing.

To achieve the foregoing objects, the present invention comprises means for implementing the following:

(1) Composing procedures for encryption and decryption to have both the feature of the cryptography (Rabin's Cryptosystem) described in the reference document 4, that is, one-way against chosen plaintext attacks (OW-CPA) and the feature of the cryptography (ElGamal's Cryptosystem) described in the reference document 5, that is, indistinguishability (strong protection of secrecy) against chosen plaintext attacks (IND-CPA). Furthermore, selecting small plaintext space without making secret information known.

Specifically, for finite group G = (Z/N)* (n = $p^d$q) that is defined to form a basic part of cipher, plaintext space (0, $2^{k-2}$) (where k |pq|) is set.

(2) In the public-key encryption method set forth in the above item (1), on the presupposition that a random function (ideal) is made public, executing calculation by exclusive OR and data coherence for a plaintext and random number data, assigning a result obtained from this calculation to a random function H and calculating the random function H, and again executing calculation by exclusive OR and data coherence for the plaintext, random number data and a result obtained from the random function H.

Preferably, one embodiment of the method comprises the following:

[Key generation]

Key generation comprising:
generating a secret key (p, q, s, β) consisting of elements p, q, s, and β, where:

-   p and q are prime numbers, p ≡ 3 (mod 4), q ≡ 3 (mod 4);
-   s ∈ Z, $gh^3$ ≡ 1 (mod pq);
-   β ∈ Z, αβ ≡ 1 (mod 1cm (p - 1, q - 1)),

and
generating a public key (n, g, h, k, 1, α) consisting of elements n, g, h, k, 1, and α (k is the bit length of pq) where:

-   α, g, h, k, 1 ∈ Z (0 < g, h < n);
-   n = $p^d$q (where d is an odd number)

[Encryption]

Encryption which the sender conducts comprising:
calculating the following equation with regard to a plaintext m (m ∈ $\{0, 1\}^\delta$):

$$m_1 = (m0^{k1} \oplus G(r)) \| (r \oplus H(m0^{k1} \oplus G(r))) \quad (0 < m_1 < 2^{k-2})$$

(where 0 < r < $2^{k0}$, G: $\{0, 1\}^{k0} \rightarrow \{0, 1\}^{\delta + k1}$, H: $\{0, 1\}^{\delta + k1} \rightarrow \{0, 1\}^{k0}$ are suitable random functions, subject to 0 < $m_1$ < $2^{k-2}$) calculating a Jacobi symbol a = ($m_1$/n) and the following equations:

$$C = m_1^{2\alpha} g^{r'} \bmod n, \quad D = h^{r'} \bmod n$$

and
sending the ciphertext (C, D, a) to said receiver.

[Decryption]

Decryption which the receiver conducts comprising:
calculating the following from the ciphertext (C, D, a), using the receiver's secrete key (p, q, s, β):

$$m_{1,p} = (CD^s)^{\frac{\beta(p+1)}{4}} \bmod p,$$

$$m_{1,q} = (CD^s)^{\frac{\beta(q+1)}{4}} \bmod q$$

finding x that fulfills conditions (x/n) = a and 0 < x < $2^{k-2}$ from among $\phi(m_{1,p}, m_{1,q})$, $\phi(-m_{1,p}, m_{1,q})$, $\phi(m_{1,p}, -m_{1,q})$,

$\phi$ (-m $_{1,p}$, -m $_{1,q}$) and determining the x as m'$_1$ (where $\phi$ represents ring isomorphism mapping from Z/(p) $\times$ Z (q) to Z/ (pq) according to Chinese remainder theorem); and

calculating the following, assuming m'$_1$ = s'‖t' (where s' is upper n bits of m'$_1$ and t' is lower k$_0$ bits thereof):

$$m' = \begin{cases} [s' \oplus G(t' \oplus H(s'))]^{n-k_1} & \text{if } [s' \oplus G(t' \oplus H(s'))]_{k_1} = 0^{k_1} \\ * & \text{otherwise} \end{cases}$$

thereby obtaining the result of decryption (where, [a]$^n$ and [a]$_n$ represent upper n bits and lower n bits of the a, respectively):

An asterisk (*) as the result of decryption denotes that decryption is unsuccessful. If decryption from a ciphertext is unsuccessful, there is a possibility that the ciphertext is intended for attack. Thus, the decryption procedure is arranged so that no plaintext message will be output as the result of unsuccessful decryption, whereby chosen ciphertext attacks can be repelled.

For actual operation, because the assumed ideal random function is impractical, a practical one-way function is used and a cipher provided with both practicability and security is composed. Clarifying the security difference between ciphers generated by using the practical one-way function and ciphers generated by using the assumed ideal random function is the subject for future study. However, because ciphers generated by using the practical one-way function are a version of cryptography that is approximate to the cryptography with proven security, it is expected that a certain degree of security is assured. For information about this, refer to "Okamot, Fujisaki, Uchiyama: New Public-Key Cryptography, Information Processing Vol. 40. No. 2, pp. 170-173 (1999. 2)."

Brief Description of Drawings

FIG. 1 is a diagram showing a system configuration for illustrative embodiments of the present invention.

FIG. 2 is a diagram showing the internal configuration of a storage medium with computing capability in an embodiment of the present invention.

FIG. 3 is a table for comparing the present invention with typical practical public-key cryptosystems in terms of efficiency (the number of modular products) and security.

Best Mode for Carrying Out the Invention

In the following description of embodiments of the invention, the encryptor is referred to as the sender, the decryptor as the receiver, and plaintext data to be encrypted is referred to as data to send. Illustrative cases of cryptographic communications will be discussed, assuming that the sender A of a message and the receiver B of the message respectively work the sender-end device and the receiver-end device and data to send is transferred from the sender to the receiver.

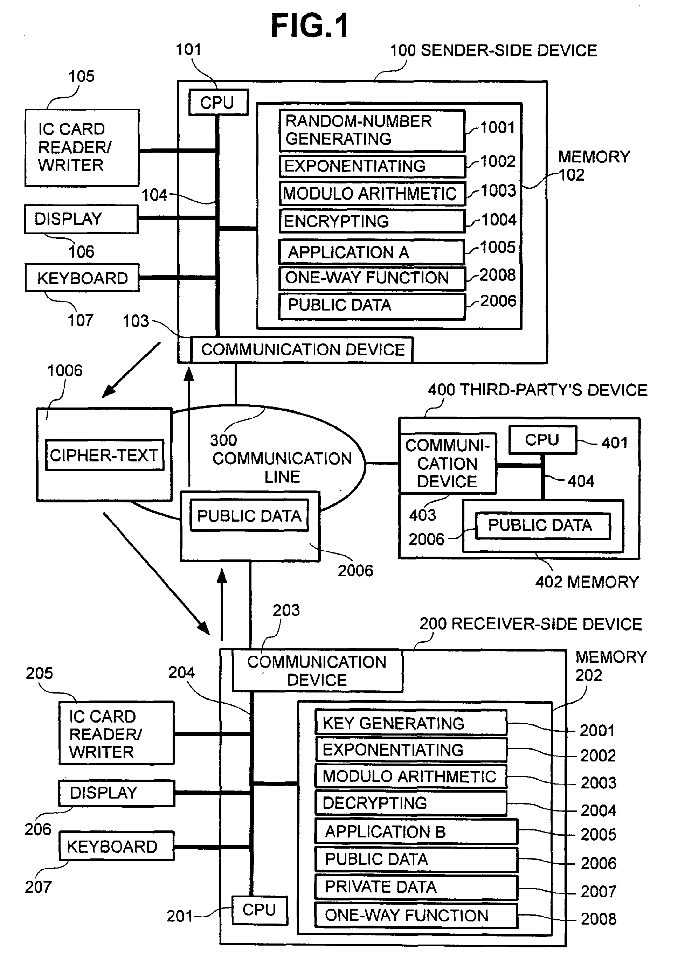

FIG. 1 is a diagram showing a system configuration for embodying the present invention in illustrative embodiments. To a network (which is also referred to as a communication line) 300, a computer operated by the encryptor (which is also referred to as an encryptor-end device or sender-end device) 100, a computer operated by the decryptor (which is also referred to as a decryptor-end device or receiver-end device) 200, and a computer operated by a third party (which is also referred to as a third-party's device) 400 are connected.

The encryptor-end device 100 and the decryptor-end device 200 each comprise a CPU (101, 201), a memory (102, 202) consisting of a secondary storage device such as a semiconductor storage device or a hard disk, a communication device (103, 203), and a bus (104, 204). In addition, a display (106, 206) and a keyboard (107, 207) are connected to the bus (104, 204). An IC card reader/writer 105, 205 that enables communication with an IC card possessed by the encryptor or the decryptor is connected to the bus 104, 204.

In the memory 102 of the encryptor-end device 100, the following are to be stored: kinds of data elements which will be mentioned in illustrative embodiments of the invention which will be set forth later; program instructions (referred to as means) to be executed by the CPU 101; plaintext data (data to send) which is input via the keyboard 107, a portable storage medium or the communication line 300 and to be encrypted; and a ciphertext to be transmitted.

In the memory 202 of the decryptor-end device 200, the following are to be stored: kinds of data elements which will be mentioned in illustrative embodiments of the invention which will be set forth later; program instructions (referred to as means) to be executed by the CPU 201; a ciphertext which is decrypted to its original plaintext; and the plaintext data (data to send) which is recovered by decryption and output to the display 206 or the communication line 300.

In the embodiments of the present invention, the receiver generates secret data and public data, using a key generating means 2001 in the receiver-end device 200. The public data is output via the communication line 300 or the like and transferred to the sender-end device 100 or made public. As the method of making the data public, a well-known method can be used; for example, registering the data on a public data management facility operating on the third party's device 400. Other data is stored into the memory 202.

An encrypting means 1004 in the sender-end device 100 generates random numbers, using a random-number generating means 1001 and executes calculations based on public data 2006 obtained from the third-party's device 400 or the receiver-end device 200, using an exponentiating means 1002 and a modulo arithmetic means 1003. Moreover, using a communication device 103, the sender-end device can send a ciphertext to the receiver-end device 200 over the communication line 300.

A decrypting means 2004 in the receiver-end device 200 decrypts the received ciphertext, based on the above-mentioned secret data 2007 retained in the device, using an exponentiating means 2002 and a modulo arithmetic means 2003.

Then, illustrative embodiments will be described below, wherein processes are carried out by the appropriate means as instructed directly or indirectly by the operator (sender or receiver) of the subject device.

(Embodiment 1)

Embodiment 1 will be described below, assuming that the sender A of a message transmits data to send m to the receiver B by cryptographic communication.

1. Keg generation process

The receiver B, in advance, generates secret data (H, s, $\alpha^{-1}$) consisting of elements H, s, and $\alpha^{-1}$, where:

- H is a subgroup of G;
- s $\in$ Z, $gh^3 = 1$ ($\in$ G);
- $\alpha^{-1} \in$ Z,

(wherein $\alpha^{-1}$ is the inverse element of $\alpha$ in a ring to modulus an order of the finite group H)
and generates public data (G, H', g, h, $\alpha$) consisting of elements G, H', g, h, and $\alpha$, where:

- G is a finite Abelian group;
- H' is a subgroup of H;
- g, h $\in$ G;
- $\alpha \in$ Z$\square$

2. Encryption and decryption processes

(1) The sender A generates a random number r with regard to a plaintext m ($\in$ H') and calculates the following:

$$C = m^{\alpha}g^r, D = h^r \ (\in G)$$

Then, the sender obtains the above public data from the third party or the receiver B and calculates additional data a which ensures that a ciphertext is uniquely decrypted to its plaintext.

Furthermore, the sender sends a ciphertext (C, D, a) to the receiver-end device 200.

(2) The receiver B calculates the following from the ciphertext (C, D, a), using the elements of (s, $\alpha^{-1}$) of the above secret data retained:

$$\widetilde{m} = (CD^3)^{\alpha \cdot 1} \ (\in H)$$

and calculates the original plaintext m from the additional data a.

(Embodiment 2)

Embodiment 2 comprises concrete procedures that specify how to give the finite Abelian group G and subgroup H mentioned in Embodiment 1 and how to generate additional data a.

1. Key generation process

The receiver B, in advance, generates secret data (p, q, s, $\beta$) consisting of elements p, q, s, and $\beta$, where:

- p and q are prime numbers, $p \equiv 3 \pmod 4$, $q \equiv 3 \pmod 4$;
- $s \in Z$, $gh^3 \equiv 1 \pmod{pq}$;
- $\beta \in Z$, $\alpha\beta \equiv 1 \pmod{1cm\ (p - 1, q - 1)}$,

and generates public data (n, g, h, k, l, $\alpha$) consisting of elements n, g, h, k, l, and $\alpha$ (k is the bit length of pq) where:

- $\alpha$, g, h, k, $1 \in Z$ $(0 < g, h < n)$;
- $n = p^d q$ (where d is an odd number)

2. Encryption and decryption processes

(1) The sender A generates a random number r $(0 \leqq r \leqq 1)$ with regard to a plaintext m $(0 < m < 2^{k-2})$ and calculates the following:

$$C = m^{2\alpha}g^r \bmod n,\ D = h^r \bmod n$$

Then, the sender obtains the above public data and calculates a Jacobi symbol a = (m/n) (for information about how to define and calculate Jacobi symbols, descriptions are given in, for example, a reference document "Sadaharu Takagi: Lecture on Elementary Theory of Numbers, Iwanami-shoten").

Furthermore, the sender sends a ciphertext (C, D, a) to the receiver-end device 200.

(2) The receiver B calculates the following from the ciphertext (C, D, a), using the above secret key (p, q, s, $\beta$) retained:

$$m_{1,p} = (CD^s)^{\frac{\beta(p+1)}{4}} \bmod p,$$

$$m_{1,q} = (CD^s)^{\frac{\beta(q+1)}{4}} \bmod q$$

and finds one that fulfills conditions (x/n) = a and $0 < x < 2^{k-2}$ from among $\phi$ ($m_{1,p}$, $m_{1,q}$), $\phi$ ($-m_{1,p}$, $m_{1,q}$), $\phi$ ($m_{1,p}$, $-m_{1,q}$), $\phi$ ($-m_{1,p}$, $-m_{1,q}$) and determines the one as the plaintext m (where $\phi$ represents ring isomorphism mapping from Z/(p) $\times$ Z (q) to Z/ (pq) according to Chinese remainder theorem).

In the method according to Embodiment 2, both one-way and indistinguishablility (strong protection of secrecy) against chosen plaintext attacks are provable.

Specifically, on the presupposition that deciphering equals solving a more difficult problem than the problem of factoring n into prime numbers, it can be proven that complete deciphering is impossible. To elucidate this, if there exists an algorithm to solve a problem (more difficult than the problem of factoring n into prime numbers), an algorithm for complete deciphering of a ciphertext generated in the method of Embodiment 2 can be composed by using the former algorithm. Conversely, if there exists an algorithm for complete deciphering of a ciphertext generated in the method of Embodiment 2, an algorithm to solve a problem (more difficult than the problem of factoring n into prime numbers) can be composed by using the former algorithm.

Furthermore, on the presupposition that a "constrained Diffie-Hellman decision problem" is difficult to solve, indistinguishablility (strong protection of secrecy) can be proven. Hereupon, to elucidate the "constrained Diffie-Hellman decision problem," the following probability distribution is assumed:

$$D_0 : (h, g, h^r, g^r),\ 0 \leq r \leq 1,$$

$$D_1 : (h, g, h^r, Xg^r), X = (x/x')^{2\alpha} \bmod n, 0 < x, x' < 2^{k-2}$$

Now, there is any sequence from $D_0$ or $D_1$. From which the sequence exists is the question to answer.

In the cryptography according to the present invention, it is proven that calculating the plaintext m from the ciphertext (C, D, a) is more difficult than a problem of factorization into prime numbers. To elucidate this, if there exists an algorithm to calculate the plaintext m from the ciphertext (C, D, a) in Embodiment 2, an algorithm to solve the problem of factorization into prime numbers can be composed by using former algorithm. Conversely, even if there exists an algorithm to solve the problem of factorization into prime numbers, an algorithm to calculate the plaintext m from the ciphertext (C, D, a) in the cryptography of the present invention remains unknown as it cannot be derived from the former algorithm. In this sense, the security against complete text deciphering is more difficult than the problem of factorization into prime numbers.

Proof is implemented as follows. Input any ciphertext to the algorithm for calculating the plaintext m from the ciphertext (C, D, a). From its output result, for composite numbers n that become bases with non-negligible probability, factor n into prime numbers. In respect of this development, this proof is similar to the proof in the cryptography disclosed in the reference document 4. This processing is further elucidated below.

- Assume that there exists a probabilistic polynomial time algorithm Adv that can compute the plaintext m from the ciphertext (C, D, a) with non-negligible probability. Then, it is shown that the probabilistic polynomial time algorithm A which can factor n into prime factors with non-negligible probability can be constructed by using Adv as an oracle.
- The algorithm A is as follows. For the public key ($\alpha$, n, g, h, l) in the offered method, evenly select m' $\in$ Z (0 < m' < $2^{k-2}$), r' $\in$ Z (0 < r' < 1), and a' $\in$ {-1, 1} and calculate the following:

$$C' = m'^{2\alpha} g^{r'} \bmod n, D' = h^{r'} \bmod n$$

Then, input C', D', and a' to the algorithm Adv.

- Since a ciphertext (C', D', a') consisting of elements of C', D', and a' has the same probability distribution as for the true ciphertext, then, the algorithm Adv outputs plaintexts, one of which is the original form of the ciphertext (C', D', a') with non-negligible probability.
- Assume that four solutions of the square root of $m'^2 \bmod \{pq\}$ are $m_1, m_2, m_3, m_4$ and $m_1 + m_2 \equiv 0 \bmod \{pq\}$ and $m_3 + m_4 \equiv 0 \bmod \{pq\}$ are fulfilled.
- Then, since the range in which the true plaintext is recovered from the ciphertext (C', D', a') by decryption of the algorithm Adv is an open interval (0, $2^{k-2}$), plaintext candidates are restricted to two ones.
- The remaining two plaintext candidates have different values of the Jacobi symbol. Hence, if constraint $(m'/n) \neq$ a' is fulfilled for Jacobi symbol a' that the algorithm A arbitrarily selected, the algorithm A can obtain an unknown plaintext from the algorithm Adv.
- Hence, with regard to output m" of the Adv, factoring n into prime numbers from gcd (m' -m", n) is successful with probability of 1/2.

Furthermore, the security against partial deciphering of the cryptography according to the present invention is equivalent to the difficulty of solving the constrained Diffie-Hellman decision problem. The proof thereof is generally the same as the way of proving that the ElGamal's Cryptosystem is indistinguishable (strong protection of secrecy), presupposing the difficulty of Diffie-Hellman decision problem.

To elucidate this, such proof is given by confirming that" if there exists an algorithm to solve the constrained Diffie-Hellman decision problem, an algorithm to make a correct inference of b $\in$ {0, 1} (the result of a tossup executed by the encryption oracle) with non-negligible probability can be composed" and that "if there exists an algorithm to make a correct inference of b with non-negligible probability, the constrained Diffie-Hellman decision problem can be solved by using the algorithm."

(Embodiment 3)

Preferably, a plaintext m should be composed to include check data for verifying the recovery of true information by decryption in addition to a message text that the sender wants to transmit to the receiver. Thereby, further measures against chosen ciphertext attacks can be taken for the public-key encryption methods of Embodiments 1 and 2.

Specifically, the sender composes a plaintext m including a predetermined redundant text in addition to the message text that the sender wants to transmit to the receiver and encrypts the plaintext by following the encryption procedure set forth in Embodiment 1 (or Embodiment 2). The receiver conducts decryption to recover the plaintext m by following the decryption procedure set forth in Embodiment 1 (or Embodiment 2), when the receiver verifies that the predetermined redundant text exists (unless the predetermined redundant text exits, decryption is regarded as unsuccessful). Redundancy can be provided in such a way, for example, as to include one or more duplications of the message that the sender wants to transmit in the plaintext.

Alternatively, the sender composes a plaintext m including a message having predetermined meaning in addition to the message text that the sender wants to transmit to the receiver and encrypts the plaintext by following the encryption procedure set forth in Embodiment 1 (or Embodiment 2). The receiver conducts decryption to recover the plaintext m by following the decryption procedure set forth in Embodiment 1 (or Embodiment 2), when the receiver verifies that the contents of the message having predetermined meaning are correct (if the contents of the message having predetermined meaning are incorrect, decryption is regarded as unsuccessful).

The means for the above processing are integrated into the encrypting means 1004 and the decrypting means 2004.

By applying the method described above, the public-key encryption methods of Embodiments 1 and 2 can provide for security to a certain degree even against chosen ciphertext attacks. (Other methods in which the security against chosen ciphertext attacks is provable will be described in further illustrative embodiments.)

(Embodiment 4)

In Embodiment 4, based on the cryptographic communications method described in Embodiment 1, further, a practicable one-way function is incorporated into the method. In this way, key-sharing between the sender and the receiver (that is, distributing a key for use in a common key encryption method) key distribution can be achieved. Moreover, environments are created that exclude chosen ciphertext attacks which are attacks in an active manner and thus the security against active attacks are assured.

In Embodiment 4. additionally, a one-way function means 2008 is provided in the sender-end device 100. An application A program 1005 and an application B program are provided as shown in FIG. 1, which respectively implement the functions of encrypting and decrypting data that is simultaneously or separately transferred therebetween by using a key distributed (or shared).

1. Key generating process

As is the case in Embodiment 1, the receiver B generates secret data (H, s, $\alpha^{-1}$) and public data (G, H', g, h, $\alpha$). At the same time, the receiver defines a one-way function f as public data.

2. Key distribution process

As is the case in Embodiment 1, the sender A calculates a ciphertext (C, D, a) and sends it to the receiver-end device 200 of the receiver B. Moreover, the sender calculates a shared key K = f (m) from the one-way function f which is public data, using the one-way function means 2008. The application A program 1005 executes calculation for encryption, using the common key K, as required.

By following the same procedure set forth in Embodiment 1, the receiver B calculates the original plaintext m from the ciphertext (C, D, a). Moreover, the receiver calculates the shared key K from the public data f in accordance with K = f (m), using the one-way function means 2008. The application B program 2005 executes calculation for decryption, using the common key K, as required.

In Embodiment 4, by using the incorporated one-way function as described above, the data to send m itself is not output to the external. Thus, safe environments can be created that exclude chosen ciphertext attacks even if the transmitted ciphertext is intended for attack, that is, the environments are secure even against active attacks.

In the embodiment arranged such that a message as such is transmitted by using the public-key encryption method according to the present invention, the application B program 2005 in the present embodiment interprets the decrypted message in accordance with a predetermined rule. If the program determines that a meaningless message has been decrypted, it makes the message erased without outputting to an external device, so that environments excluding active attacks can be created.

(Embodiment 5)

Embodiment 5 comprises concrete procedures that specify how to give the finite Abelian group G and subgroup H mentioned in Embodiment 1 and how to generate additional data a, as described in Embodiment 2, with regard to the key-sharing method described in Embodiment 4.

1. Key generating process

As is the case in Embodiment 2, the receiver B generates secret data (p, q, s, β) and public data (n, g, h, k, 1, α) (where k is the bit length of pq). Moreover, the receiver defines a one-way function f as public data.

2. Key distribution process

The sender A calculates a ciphertext (C, D, a) in the same way as in Embodiment 2 and sends it to the receiver-end device 200. Moreover, the sender calculates a shared key K = f (m) from the one-way function f in the same way as in Embodiment 4. The application A program 1005 executes calculation for encryption, using the common key K, as required.
The receiver B calculates the plaintext m in the same way as in Embodiment 2. Moreover, the receiver calculates the shared key K = f (m) in the same way as in Embodiment 4. The application B program 2005 executes calculation for, decryption, using the common key K, as required.

(Embodiment 6)

With the aim of improving the decryption process, Embodiment 6 uses the cryptography described in the reference document 4 as the basis and converts it to a method that is defined in a multiplicative group determined from a ring of remainders modulo $n = p^d q$ (where d is an odd number of 3 or greater). Further conversion is made to a public-key encryption method in which the indistinguishability (strong protection of secrecy) against adaptive chosen ciphertext attacks is provable in accordance with the method described in the reference document 12.

1. Key generation process

As is the case in the foregoing embodiments, the receiver B, in advance, generates secrete data (p, q, β) consisting of elements p, q, and β, where:

- p and q are prime numbers, $p \equiv 3$ (mod 4), $q \equiv 3$ (mod 4);
- $\beta \in Z$, $\alpha\beta \equiv 1$ (mod 1cm (p - 1, q - 1)), and generates public data (n, k, α) consisting of elements n, k, and α (k is the bit length of pq), where:

- $\alpha, k \in Z$;
- $n = p^d q$ (where d is an odd number)

2. Encryption and decryption processes

(1) The sender A selects a random number r ($0 < r < 2^{k0}$) with regard to a plaintext m ($m \in \{0, 1\}^{\delta}$) and calculates the following:

$$m_1 = (m0^{k1} \oplus G (r)) \| (r \oplus H (m0^{k1} \oplus G(r))) \quad (0 < m_1 < 2^{k-2})$$

(where G: $\{0, 1\}^{k0} \rightarrow \{0, 1\}^{\delta + k1}$, H: $\{0, 1\}^{\delta + k1} \rightarrow \{0, 1\}^{k0}$ are suitable random functions, subject to $0 < m_1 < 2^{k-2}$)
Then, the sender obtains the above public data and calculates a Jacobi symbol a = ($m_1$/n) and the following:

$$C = m_1^{2\alpha} \bmod n$$

Furthermore, the sender send a ciphertext (C, a) to the receiver-end device 200.
(2) The receiver B calculates the following from the ciphertext (C, a), using the above secret data (p, q, β) retained:

$$m_{1,p} = (CD^s)^{\frac{\beta(p+1)}{4}} \bmod p,$$

$$m_{1,q} = (CD^s)^{\frac{\beta(q+1)}{4}} \mod q$$

and finds x that fulfills conditions $(x/n) = a$ and $0 < x < 2^{k-2}$ from among $\phi\,(m_{1,p}, m_{1,q})$, $\phi\,(-m_{1,p}, m_{1,q})$, $\phi\,(m_{1,p}, -m_{1,q})$, $\phi\,(-m_{1,p}, -m_{1,q})$ and determines the x as the x as $m'_1$ (where $\phi$ represents ring isomorphism mapping from $Z/(p) \times Z(q)$ to $Z/(pq)$ according to Chinese remainder theorem).

Furthermore, using the arithmetic means 204, the receiver calculates the following, assuming $m'_1 = s'\|t'$ (where $s'$ is upper n bits of $m'_1$ and $t'$ is lower $k_0$ bits thereof):

$$m' = \begin{cases} [s' \oplus G(t' \oplus H(s'))]^{n-k_1} & \text{if } [s' \oplus G(t' \oplus H(s'))]_{k_1} \doteq 0^{k_1} \\ * & \text{otherwise} \end{cases}$$

(where $[a]^n$ and $[a]_n$ represent upper n bits and lower n bits of the a, respectively. An asterisk (*) as the result of decryption denotes that decryption is unsuccessful.)
thereby obtaining the result of decryption.

If decryption from a ciphertext is unsuccessful, there is a possibility that the ciphertext is intended for attack. Thus, the receiver-end device 200 does not output the plaintext message as the result of such decryption to make chosen ciphertext attack impossible. In this case, the receiver-end device 200 may be arranged to output nothing as the result of unsuccessful decryption or report that decryption is unsuccessful.

For the above method, the indistinguishability (strong protection of secrecy) against adaptive chosen plaintext attacks are provable, due to that the difficulty of deciphering is equivalent to the difficulty of solving the problem of factoring n in to prime numbers, as proven for (deterministic) public-key ciphers composed from trapdoors permutation for general use in the reference document 12,

In Embodiment 6, computation for obtaining a modular product is executed three times (assuming $\alpha = 3$) during the encryption process and decryption computation is executed in a multiplicative group from a ring of remainders modulo pq that is smaller than n. Thus, processing at higher speed than in the previous cryptographic methods is achieved.

(Embodiment 7)

Embodiment 7 converts the method of Embodiment 2 to a public-key encryption method in which the indistinguishability (strong protection of secrecy) against adaptive chosen plaintext attacks is provable in accordance with the method described in the reference document 12.

1. Key generation process

As is the case in Embodiment 2, secret data (p, q, s, $\beta$) and public data (n, g, h, k, 1, $\alpha$) are generated.

2. Encryption and decryption processes

The sender A calculates $m_1$ with regard to a plaintext m ($0 < m < 2^\delta$) in the same way as in Embodiment 6. Then, the sender calculates C and D with regard to $m_1$ in the same way as the calculation with regard to the plaintext m in Embodiment 2. Furthermore, the sender obtains the above public data and calculates a Jacobi symbol $a = (m_1/n)$. The sender sends a ciphertext (C, D, a) to the receiver-end device 200.

The receiver B executes the same calculation as in Embodiment 2 from the ciphertext (C, D, a), using the above secret data (p, q, s, $\beta$) and thus obtains $m_{1,p}$, $m_{1,q}$. The receiver finds one that fulfills conditions $(x/n) = a$ and $0 < x < 2^{k-2}$ from among $\phi\,(m_{1,p}, m_{1,q})$, $\phi\,(-m_{1,p}, m_{1,q})$, $\phi\,(m_{1,p}, -m_{1,q})$, $\phi\,(-m_{1,p}, -m_{1,q})$ and determines the one as $m'_1$. Furthermore, the receiver calculates the following, assuming $m'_1 = s'\|t'$ (where $s'$ is upper n bits of $m'_1$ and $t'$ is lower $k_0$ bits thereof):

$$m' = \begin{cases} [s' \oplus G(t' \oplus H(s'))]^{n-k_1} & \text{if } [s' \oplus G(t' \oplus H(s'))]_{k_1} = 0^{k_1} \\ * & \text{otherwise} \end{cases}$$

thereby obtaining the result of decryption.

In the method according to Embodiment 7, it is provable that encrypted information is IND-CCA2 on the presupposition that deciphering equals solving a more difficult problem than the problem of factoring n into prime numbers.

The table in FIG. 10 lists data indicating efficiency (the number of modular products) and security for comparing Embodiment 8 of the present invention where it is assumed that $\alpha = d = 3$ with typical and practical public-key cryptosystems. As regards the method of the invention, the number given in the parentheses is the result from preprocessing executed if practicable. Most of the data in FIG. 10 was excerpted from the reference document 9.

(Embodiment 8)

Embodiment 8 is a modification to Embodiment 7.

1. Key generation process

As is the case in Embodiment 7, secret data $(p, q, s, \beta)$ and public data $(n, g, h, k, 1, \alpha)$ are generated.

2. Encryption and decryption processes

The sender A selects a random number r $(r \in \{0, 1\}^{k0})$ with regard to a plaintext m $(m \in \{0, 1\}^{\delta})$ and calculate the following:

$$m_1 = (m \oplus G(r)) \| (r \oplus H(m \oplus G(r))) \quad (0 < m_1 < 2^{k-2})$$

(where, G: $\{0, 1\}^{k0} \to \{0, 1\}^{\delta + k1}$, H: $\{0, 1\}^{\delta + k1} \to \{0, 1\}^{k0}$ are suitable random functions, subject to $0 < m_1 < 2^{k-2}$.)

Then, the sender obtains the above public data and calculates a Jacobi symbol a = $(m_1/n)$ and the following:

$$C = m_1^{2\alpha} g^{F(m1)} \bmod n, D = h^{F(m1)} \bmod n$$

where, F: $\{0, 1\}^{\delta + k0 + k1} \to \{0, 1\}^1$ is a suitable random function.

Furthermore, the sender sends ciphertext (C, D, a) to the receiver-end device 200.

The receiver B executes the same calculation as in Embodiment 7 from the ciphertext (C, D, a), using the above secret data $(p, q, s, \beta)$, and finds one that fulfills conditions (x/n) = a and $0 < x < 2^{k-2}$ from among $\phi(m_{1,p}, m_{1,q})$, $\phi(-m_{1,p}, m_{1,q})$, $\phi(m_{1,p}, -m_{1,q})$, $\phi(-m_{1,p}, -m_{1,q})$ and determines the one as m'$_1$. Then, the receiver calculates the following, assuming m'$_1$ = s'$\|$t' (where s' is upper n bits of m'$_1$ and t' is lower $k_0$ bits thereof):

$$m' = \begin{cases} s' \oplus G(t' \oplus H(s')) & \text{if } (C, D) = (C', D') \\ * & \text{otherwise} \end{cases}$$

where, C' and D' are obtained by:

$$C' = m'_1^{2\alpha} g^{F(m'1)} \bmod n, D' = h^{F(m'1)} \bmod n$$

thereby obtaining the result of description.

In the method according to Embodiment 8, it is provable that encrypted information is IND-CCA2 on the presupposition that deciphering equals solving a more difficult problem than the problem of factoring n into prime numbers.

Furthermore, a longer plaintext can be encrypted in the method of Embodiment 8 as compared with the method of Embodiment 2.

(Embodiment 9)

Embodiment 9 is a modification to Embodiment 7.

1. Key generation process

Key generation is carried out in the same way as in Embodiment 7.

2. Encryption and decryption processes

The sender A selects a random number r ($r \in \{0, 1\}^{k0}$) with regard to a plaintext m ($m \in \{0, 1\}^{\delta}$) and calculates the following:

$$m_1 = m \| r$$

where, F: $\{0, 1\}^{\delta + k0} \rightarrow \{0, 1\}^1$ is a suitable random function, subject to $0 < m_1 < 2^{k-2}$.

Then, the sender obtains the above public data and calculates a Jacobi symbol a = ($m_1/n$) and the following:

$$C = m_1^{2\alpha} g^{F(m1)} \bmod n, D = h^{F(m1)} \bmod n$$

Furthermore, the sender sends a ciphertext (C, D, a) to the receiver-end device 200.

As is the case in Embodiment 8, the receiver B obtains $m_{1, p}$, $m_{1, q}$ from the ciphertext (C, D, a), using the above secret data (p, q, s, β). The receiver finds one that fulfills conditions (x/n) = a and $0 < x < 2^{k-2}$ from among $\phi$ ($m_{1, p}$, $m_{1, q}$), $\phi$ ($-m_{1, p}$, $m_{1, q}$), $\phi$ ($m_{1, p}$, $-m_{1, q}$), $\phi$ ($-m_{1, p}$, $-m_{1, q}$) and determines the one as $m'_1$. Furthermore, the receiver calculates the following:

$$m' = \begin{cases} [m'_1]^{k_0} & \text{if } (C, D) = (C', D') \\ * & \text{otherwise} \end{cases}$$

where, C' and D' are obtained by:

$$C' = m'_1{}^{2\alpha} g^{F(m'1)} \bmod n, D' = h^{F(m'1)} \bmod n$$

thereby obtaining the result of decryption.

In the method according to Embodiment 9, it is provable that encrypted information is IND-CCA2 on the presupposition that deciphering equals the difficulty of solving the constrained Diffie-Hellman decision problem.

Furthermore, a longer plaintext can be encrypted in the method of Embodiment 9 as compared with the method of Embodiment 2.

(Embodiment 10)

Embodiment 10 comprises the. descriptions of a decryption method for augmenting the computational efficiency on the receiver end, based on Embodiments 8 and 9.

The receiver calculates the following:

$$C'_p = m'_1{}^{2\alpha} g^{F(m'1)} \bmod p^d \qquad C'_q = m'_1{}^{2\alpha} g^{F(m'1)} \bmod q$$

$$D'_p = h^{F(m'1)} \bmod p^d \qquad D'_q = h^{F(m'1)} \bmod q$$

and verifies that $(C, D) = (C', D')$, pursuant to:

$$C \equiv C'_p \ (\bmod \ p^d) \ C \equiv C'_q \ (\bmod \ q)$$

$$D \equiv D'p \ (\bmod \ p^d) \ D \equiv D'_q \ (\bmod \ q)$$

In accordance with Embodiment 10, integers as bases that determine a multiplicative group which is determined from a ring of remainders become small, and thus high-speed processing can be achieved.

(Embodiment 11)

As an alternative to the ciphertext calculation process in the foregoing embodiments, it is feasible that calculation to obtain m' is executed on a storage medium 500 with computing capability possessed by the sender and the resulting value of m' is transferred to the sender-end device 100 for ciphertext calculation.

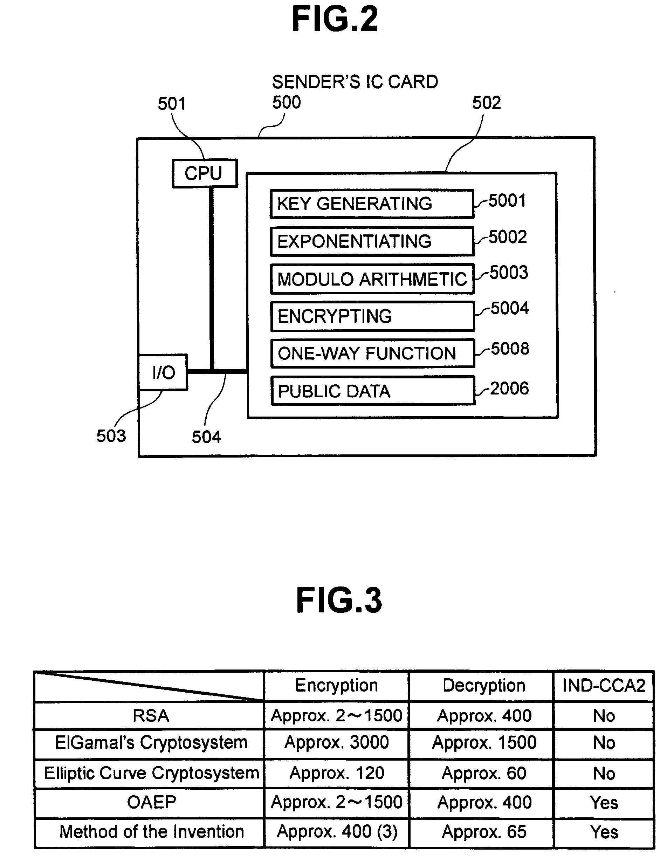

FIG. 2 shows the internal configuration of the storage medium 500 with computing capability (for example, an IC card or a computerized card). The storage medium 500 with computing capability comprises a CPU 501, a memory 502 consisting of a storage device such as a semiconductor storage device, I/O 503, and a bus 504. To the memory 502, kinds of data and program instructions (referred to means) to be executed by the CPU 501 are input via the I/O 503. Plaintext data (data to send) which is to be encrypted is stored into the memory 502.

In the present embodiment which will be described later, an encrypting means 5004 in the storage medium 500 with computing capability executes calculation to obtain m' as an intermediate calculation result from a plaintext m, using the above-mentioned public data 2006 retained on the memory 502, together with an exponentiating means 5002 and a modulo arithmetic means 5003, and transfers the resulting value of m' to the sender-end device 100.

The feature of this way of embodiment is as follows. According to this method, a message m generated in the IC card 500 is so secure that it is not made known even to the sender-end device 100, into the slot of which the card is inserted. At the same time, a ciphertext can be generated by using the high-speed computing ability of the sender-end device 100.

Specifically, when the present embodiment is based on Embodiments 1 and 4, the storage medium 500 with computing capability calculates the following from a plaintext m:

$$m' = m^{\alpha} \ (\in G)$$

Using the resultant m', the sender-end device 100 calculates a ciphertext, according to:

$$C = m'g^r, D = h^r \ (\in G)$$

When the present embodiment is based on Embodiments 2 and 5, the storage medium 500 with computing capability calculates the following from a plaintext m:

$$C = m'g^r \bmod n, D = h^r \bmod n$$

Using the resultant m', the sender-end device 100 calculates a ciphertext, according to:

$$C = m'g^r \bmod n, D = h^r \bmod n$$

When the present embodiment is based on Embodiment 7, the storage medium 500 with computing capability calculates the following from a plaintext m:

$$m'_1 = m_1^{2\alpha} \bmod n$$

Using the resultant m'; the sender-end device 100 calculates a ciphertext, according to:

$$C = m'_1 \, g^{r'} \bmod n, \ D = h^{r'} \bmod n$$

When the present embodiment is based on Embodiments 8 and 9, the storage medium 500 with computing capability calculates the following from a plaintext m:

$$m'_1 = m_1^{2\alpha} \bmod n$$

Using the resultant m', the sender-end device 100 calculates a ciphertext, according to:

$$C = m'_1 \, g^{F(m1)} \bmod n, \ D = h^{F(m1)} \bmod n$$

In the foregoing embodiments, by selecting a great value of d (d $\geqq$ 1) in the range that factoring n into primer numbers is difficult to solve, the bit count of p becomes small if the bit count of n is constant and thus high-speed decryption processing can be performed. If d is an odd number and d > 1, the processing efficiency can be still more improved.

If the value of d is put under the management of the third party's device or the receiver-end device, it can be varied, according to further development of the computer ability and relation between the computation time required for factorization into prime numbers and the safety.

Preprocessing is possible for the calculations that do not relate to the data to send m to be encrypted, but being involved in the foregoing embodiments, such as:

$$g^r, h^r \ (\in G)$$

or

$$g^r \bmod n, h^r \bmod n$$

It is advisable to execute these calculations in advance and store the resultant values into the storage means (such as the memory 102) of the sender-end device 100. By reading these values when they are used, the time required for encryption can be reduced drastically.

When such preprocessing is performed, the number of modular products during the process for the data to send m becomes one. Therefore, the time required for encryption can be reduced drastically.

As the data to send m in the foregoing embodiments, besides an ordinary message that the sender wants to send in secret, a common key for use in the common key cryptographic method, a message to be used for message authentication and a message authenticator in combination are applicable.

Although the typical form of cryptographic communication between the sender working the sender's device and the receiver working the receiver's device was discussed in the present embodiments, practically, the invention may be applied to various types of systems.

Although the typical form of cryptographic communication between the sender working the sender's device and the receiver working the receiver's device was discussed in the foregoing embodiments, practically, the invention may be applied to various types of systems.

For example, in an electronic shopping system, the sender is a user, the sender-end device is a computer such as a personal computer, the receiver is a retail shop, and the receiver-end device is a computer such as a personal computer. In this case, the user's order for a commodity is often encrypted by the common key cryptographic method. For such key encryption, the key-sharing (key distribution) method according to the present invention may be used and the encrypted key is sent to the computer on the retail shop end.

Another application example is an E-mail system wherein the sender and receiver devices are computers such as personal computers and the sender's message is often encrypted by the common key cryptographic method.

In this case, similarly, the key-sharing (key distribution) method according to the present invention may be used for key encryption and the encrypted key is sent to the receiver's computer.

For other diverse systems for which conventional public-key cryptography is used, the present invention is applicable.

The above description assumes that all calculations in the present embodiments are executed in the way that the CPU executes the program instructions stored in the memory. However, an alternative may be adopted such that at least one arithmetic unit of LSI or other hardware is installed to operate instead of programs and transfer data to/ from other arithmetic units and the CPU.

Industrial Applicability

In accordance with the present invention, a public-key encryption method that is secure against ciphertext attacks and enables high-speed processing and its variety of applications can be provided.

**Claims**

**1.**   A public-key encryption method for data transmitted between a sender who encrypts data to send with a public key and a receiver who decrypts the data encrypted and delivered to the receiver with a secret key corresponding to said public key, said public-key encryption method comprising:

(a) a key generation step which the receiver conducts by working the receiver-end device, according to a procedure comprising:

generating a secret key (H, s, $\alpha^{-1}$) consisting of elements H, s, and $\alpha^{-1}$, where:

-   H is a subgroup of G;
-   s E Z, $gh^3 = 1$ ($\in$ G);
-   $\alpha^{-1} \in$ Z,

(wherein $\alpha^{-1}$ is the inverse element of $\alpha$ in a ring modulo order of the finite group H)
    and
generating a public key (G, H', g, h, $\alpha$) consisting of elements G, H', g, h, and $\alpha$, where:

-   G is a finite Abelian group;
-   H' is a subgroup of H;
-   g, h $\in$ G;
-   $\alpha \in$ Z, $\square$

(b) encryption which the sender conducts by working the sender-end device, according to a procedure comprising:

calculating the following equations with regard to a plaintext m ($\in$ H') and a random number r:

$$C = m^{\alpha}g^{r}, D = h^{r} \ (\in G)$$

calculating additional data a which ensures that a ciphertext is uniquely decrypted to its plaintext;
composing a ciphertext (C, D, a) from the obtained C, D, and a; and
sending the ciphertext (C, D, a) to said receiver,

(c) decryption which said receiver conducts by working said receiver-end device, according to a procedure comprising:

calculating the following equation from the ciphertext (C, D, a), using the elements of (s, $\alpha^{-1}$) of said secret key:

$$\widetilde{\mathbf{m}} = (\mathbf{CD^3})^{\alpha \cdot 1} \ (\in \mathbf{H})$$

and

calculating the original plaintext m from the additional data a.

2. A public-key encryption method for data transmitted between a sender who encrypts data to send with a public key and a receiver who decrypts the data encrypted and delivered to the receiver with a secret key corresponding to said public key, said public-key encryption method comprising:

(a) a key generation step which the receiver conducts by working the receiver-end device, according to a procedure comprising:

generating a secret key $(p, q, s, \beta)$ consisting of elements p, q, s, and $\beta$, where:

- p and q are prime numbers, $p \equiv 3 \ (\text{mod } 4)$, $q \equiv 3 \ (\text{mod } 4)$;
- $s \in Z$, $gh^3 \equiv 1 \ (\text{mod } pq)$;
- $\beta \in Z$, $\alpha\beta \equiv 1 \ (\text{mod } 1cm \ (p - 1, q - 1))$,

and

generating a public key $(n, g, h, k, 1, \alpha)$ consisting of elements n, g, h, k, 1, and $\alpha$ (k is the bit length of pq) where:

- $\alpha, g, h, k, 1 \in Z \ (0 < g, h < n)$;
- $n = p^d q$ (where d is an odd number),

(b) encryption which the sender conducts by working the sender-end device, according to a procedure comprising:

calculating the following equations with regard to a plaintext m $(0 < m < 2^{k-2})$ and a random number r $(0 \leqq r \leqq 1)$:

$$C = m^{2\alpha} g^r \ \text{mod } n, \ D = h^r \ \text{mod } n$$

calculating a Jacobi symbol a = (m/n); and
sending the ciphertext (C, D, a) to said receiver,

(c) decryption which said receiver conducts by working said receiver-end device, according to a procedure comprising:

calculating the following from the ciphertext (C, D, a), using said secrete key $(p, q, s, \beta)$:

$$m_{1,p} = (CD^s)^{\frac{\beta(p+1)}{4}} \ \text{mod } p,$$

$$m_{1,q} = (CD^s)^{\frac{\beta(q+1)}{4}} \ \text{mod } q$$

and
finding one that fulfills conditions (x/n) = a and $0 < x < 2^{k-2}$ from among $\phi (m_{1,p}, m_{1,q})$, $\phi (-m_{1,p}, m_{1,q})$, $\phi (m_{1,p}, -m_{1,q})$, $\phi (-m_{1,p}, -m_{1,q})$ and determining the one as the plaintext m (where $\phi$ represents ring isomorphism mapping from $Z/(p) \times Z (q)$ to $Z/ (pq)$ according to Chinese remainder theorem).

3. The public-key encryption method as recited in claim 2, further comprising:

a step that said sender composes said plaintext m including check data for verifying the recovery of true information by decryption in addition to a message text which must be transmitted to said receiver.

4. The public-key encryption method as recited in claim 3, further comprising:

a step that said sender composes said plaintext m including a predetermined redundant text in addition to a message text which must be transmitted to said receiver before encrypting the text in accordance with the procedure set forth in claim 1; and
a step that said receiver verifies that the predetermined redundant text exists when performing decryption to recover the plaintext m in accordance with the procedure set forth in claim 1.

5. The public-key encryption method as recited in claim 3, further comprising:

a step that said composes said plaintext m including a predetermined redundant text in addition to a message text which must be transmitted to said receiver before encrypting the text in accordance with the procedure set forth in claim 2; and
a step that said receiver verifies that the predetermined redundant text exists when performing decryption to recover the plaintext m in accordance with the procedure set forth in claim 2.

6. The public-key encryption method as recited in claim 2, wherein:

a random function H is made public; and
said sender works the sender-end device to conduct:

generating random number data;
executing calculation for the random number data by exclusive OR and data coherence;
assigning a result obtained from the calculation to the random function H, calculating the random function and obtaining a result from the random function H;
executing calculation for the random number data and the result from the random function H by exclusive OR and data coherence;
replacing the random number r mentioned in claim 2 by a result obtained from this calculation; and
executing encryption, according to the encryption procedure in the public-key encryption method set forth in claim 2.

7. A public-key decryption method for decrypting a ciphertext encrypted in accordance with the method of claim 6, comprising the steps of:

carrying out the decryption procedure in the public-key encryption method set forth in claim 2;
verifying the validity of the calculation procedure by exclusive OR and data coherence executed as set forth in claim 6; and
outputting the result of decryption.

8. A public-key encryption method for data transmitted between a sender who encrypts data to send with a public key and a receiver who decrypts the data encrypted and delivered to the receiver with a secret key corresponding to said public key, said public-key encryption method comprising:

(a) a key generation step which the receiver conducts by working the receiver-end device, according to a procedure comprising:

generating a secret key $(p, q, \beta)$ consisting of elements p, q, and $\beta$, where:

- p and q are prime numbers, $p \equiv 3$ (mod 4), $q \equiv 3$ (mod 4);
- $\beta \in Z$, $\alpha\beta \equiv 1$ (mod 1cm (p - 1, q - 1)),
    and

generating a public key $(n, k, \alpha)$ consisting of elements n, k, and $\alpha$ (k is the bit length of pq), where:

- $\alpha, k \in Z$;

- n = $p^d q$ (where d is an odd number),

(b) encryption which the sender conducts by working the sender-end device, according to a procedure comprising:

calculating the following equation with regard to a plaintext m $(0 < m < 2^{k-2})$:

$$m_1 = (m0^{k1} \oplus G(r)) \| (r \oplus H(m0^{k1} \oplus G(r))) \qquad (0 < m_1 < 2^{k-2})$$

(where G: $\{0, 1\}^{k0} \to \{0, 1\}^n$, H: $\{0, 1\}^0 \to \{0, 1\}^{k0}$ are suitable random functions, subject to $k = n + k_0 + 2$) calculating a Jacobi symbol $a = (m_1/n)$ and the following equation:

$$C = m_1^{2\alpha} \bmod n$$

and
sending the ciphertext (C, a) to said receiver,

(c) decryption which said receiver conducts by working said receiver-end device, according to a procedure comprising:

calculating the following from the ciphertext (C, a), using said secrete key (p, q, β):

$$m_{1,p} = (CD^s)^{\frac{\beta(p+1)}{4}} \bmod p,$$

$$m_{1,q} = (CD^s)^{\frac{\beta(q+1)}{4}} \bmod q$$

finding x that fulfills conditions (x/n) = a and $0 < x < 2^{k-2}$ from among $\phi(m_{1,p}, m_{1,q})$, $\phi(-m_{1,p}, m_{1,q})$, $\phi(m_{1,p}, -m_{1,q})$, $\phi(-m_{1,p}, -m_{1,q})$ and determining the x as $m'_1$ (where $\phi$ represents ring isomorphism mapping from $Z/(p) \times Z(q)$ to $Z/(pq)$ according to Chinese remainder theorem); and
calculating the following, assuming $m'_1 = s'\|t'$ (where s' is upper n bits of $m'_1$ and t' is lower $k_0$ bits thereof):

$$m' = \begin{cases} [s' \oplus G(t' \oplus H(s'))]^{n-k_1} & \text{if } [s' \oplus G(t' \oplus H(s'))]_{k_1} = 0^{k_1} \\ * & \text{otherwise} \end{cases}$$

(where [a]" and $[a]_n$ represent upper n bits and lower n bits of the a, respectively. An asterisk (*) as the result of decryption denotes that decryption is unsuccessful.)
thereby obtaining the result of decryption.

9. A public-key encryption method for data transmitted between a sender who encrypts data to send with a public key and a receiver who decrypts the data encrypted and delivered to the receiver with a secret key corresponding to said public key, said public-key encryption method comprising:

(a) a key generation step which the receiver conducts by working the receiver-end device, according to a procedure comprising:

generating a secret key (p, q, s, β) consisting of elements p, q, s, and β, where:

- p and q are prime numbers, $p \equiv 3 \pmod 4$, $q \equiv 3 \pmod 4$;
- s E Z, $gh^3 \equiv 1 \pmod{pq}$;

- $\beta \in Z$, $\alpha\beta \equiv 1$ (mod 1cm (p - 1, q - 1)),

and

generating a public key (n, g, h, k, 1, $\alpha$) consisting of elements n, g, h, k, 1, and $\alpha$ (k is the bit length of pq) where:

- $\alpha$, g, h, k, 1 $\in Z$ (0 < g, h < n);
- $n = p^d q$ (where d is an odd number),

(b) encryption which the sender conducts by working the sender-end device, according to a procedure comprising:

calculating the following equation with regard to a plaintext m ($0 < m < 2^{k-1}$) and a random number r' ($0 \leqq r' \leqq 1$):

$$m_1 = (m0^{k1} \oplus G\,(r)) \parallel (r \oplus H\,(m0^{k1} \oplus G(r))) \qquad (0 < m_1 < 2^{k-2})$$

(where G: $\{0, 1\}^{k0} \rightarrow \{0, 1\}^n$, H: $\{0, 1\}^n \rightarrow \{0, 1\}^{k0}$ are suitable random functions, subject to $k = n + k_0 + 2$) calculating a Jacobi symbol a = $(m_1/n)$ and the following equations:

$$C = m_1^{2\alpha}g^{r'} \bmod n, \quad D = h^{r'} \bmod n$$

and
sending the ciphertext (C, D, a) to said receiver,

(c) decryption which said receiver conducts by working said receiver-end device, according to a procedure comprising:

calculating the following from the ciphertext (C, D, a), using said secrete key (p, q, s, $\beta$):

$$C = m_1^{2\alpha}g^{r'} \bmod n, \quad D = h^{r'} \bmod n$$

finding x that fulfills conditions (x/n) = a and $0 < x < 2^{k-2}$ from among $\phi\,(m_{1,\,p}, m_{1,\,q})$, $\phi\,(-m_{1,\,p}, m_{1,\,q})$, $\phi\,(m_{1,\,p}, -m_{1,\,q})$, $\phi\,(-m_{1,\,p}, -m_{1,\,q})$ and determining the x as $m'_1$ (where $\phi$ represents ring isomorphism mapping from $Z/(p) \times Z\,(q)$ to $Z/\,(pq)$ according to Chinese remainder theorem); and calculating the following, assuming $m'_1 = s'\|t'$ (where s' is upper n bits of $m'_1$ and t' is lower $k_0$ bits thereof):

$$m' = \begin{cases} [s' \oplus G(t' \oplus H(s'))]^{n-k_1} & \text{if } [s' \oplus G(t' \oplus H(s'))]_{k_1} = 0^{k_1} \\ * & \text{otherwise} \end{cases}$$

(where $[a]^n$ and $[a]_n$ represent upper n bits and lower n bits of the a, respectively. An asterisk (*) as the result of decryption denotes that decryption is unsuccessful.)
thereby obtaining the result of decryption.

**10.** A public-key encryption method for data transmitted between a sender who encrypts data to send with a public key and a receiver who decrypts the data encrypted and delivered to the receiver with a secret key corresponding to said public key, said public-key encryption method comprising:

(a) a key generation step which the receiver conducts by working the receiver-end device, according to a procedure comprising:

generating a secret key (p, q, s, $\beta$) consisting of elements p, q, s, and $\beta$, where:

- p and q are prime numbers, $p \equiv 3 \pmod 4$, $q \equiv 3 \pmod 4$;
- $s \in Z$, $gh^3 \equiv 1 \pmod{pq}$;
- $\beta \in Z$, $\alpha\beta \equiv 1 \pmod{1cm\ (p - 1, q - 1)}$,
    and

generating a public key $(n, g, h, k, 1, \alpha)$ consisting of elements n, g, h, k, l, and $\alpha$ (k is the bit length of pq) where:

- $\alpha, g, h, k, l \in Z$ $(0 < g, h < n)$;
- $n = p^d q$ (where d is an odd number),

(b) encryption which the sender conducts by working the sender-end device, according to a procedure comprising:

calculating the following equation with regard to a plaintext m $(0 < m < 2^n)$:

$$m_1 = (m \oplus G\,(r))\,\|(r \oplus H\,(m \oplus G(r))) \qquad (0 < m_1 < 2^{k-2})$$

(where $G: \{0, 1\}^{k0} \to \{0, 1\}^n$ , $H: \{0, 1\}^n \to \{0, 1\}^{k0}$ are suitable random functions, subject to $k = n + k_0 + 2$) calculating a Jacobi symbol $a = (m_1/n)$ and the following equations:

$$C = m_1^{2\alpha}\, g^{F(m1)} \bmod n,\ D = h^{F(m1)} \bmod n$$

(where $F: \{0, 1\}^{n + k0} \to \{0, 1\}^1$ is a suitable random function)
    and
sending the ciphertext (C, D, a) to said receiver,

(c) decryption which said receiver conducts by working said receiver-end device, according to a procedure comprising:

calculating the following from the ciphertext (C, D, a), using said secrete key $(p, q, s, \beta)$:

$$m_{1,p} = (CD^s)^{\frac{\beta(p+1)}{4}} \bmod p,$$

$$m_{1,q} = (CD^s)^{\frac{\beta(q+1)}{4}} \bmod q$$

finding x that fulfills conditions $(x/n) = a$ and $0 < x < 2^{k-2}$ from among $\phi\,(m_{1,p},\, m_{1,q})$, $\phi\,(-m_{1,p},\, m_{1,q})$, $\phi\,(m_{1,p},\, -m_{1,q})$, $\phi\,(-m_{1,p},\, -m_{1,q})$ and determining the x as $m'_1$ (where $\phi$ represents ring isomorphism mapping from $Z/(p) \times Z\,(q)$ to $Z/\,(pq)$ according to Chinese remainder theorem); and
calculating the following, assuming $m'_1 = s'\|t'$ (where s' is upper n bits of $m'_1$ and t' is lower $k_0$ bits thereof):

$$m' = \begin{cases} s' \oplus G(t' \oplus H(s')) & \text{if } (\dot{C}, D) = (C', D') \\ * & \text{otherwise} \end{cases}$$

(where, C' arid D' are obtained by:

$$C' = m'^{2\alpha}_1\, g^{F(m'1)} \bmod n,\ D' = h^{F(m'1)} \bmod n$$

and [a]" and [a]$_n$ represent upper n bits and lower n bits of the a, respectively. An asterisk (*) as the result of decryption denotes that decryption is unsuccessful.)
thereby obtaining the result of decryption.

**11.** The public-key encryption method as recited in claim 10, wherein:
said receiver works said receiver-end device to calculate the following:

$$C'_p = m'_1{}^{2\alpha} g^{F(m'1)} \bmod p^d \qquad C'_q = m'_1{}^{2\alpha} g^{F(m'1)} \bmod q$$

$$D'_p = h^{F(m'1)} \bmod p^d \qquad D'_q = h^{F(m'1)} \bmod q$$

and verify that (C, D) = (C', D'), pursuant to:

$$C \equiv C'_p \ (\bmod \ p^d) \ C \equiv C'_q \ (\bmod \ q)$$

$$D \equiv D'_p \ (\bmod \ p^d) \ D \equiv D'_q \ (\bmod \ q)$$

**12.** A public-key encryption method for data transmitted between a sender who encrypts data to send with a public key and a receiver who decrypts the data encrypted and delivered to the receiver with a secret key corresponding to said public key, said public-key encryption method comprising:

(a) a key generation step which the receiver conducts by working the receiver-end device, according to a procedure comprising:

generating a secret key (p, q, s, β) consisting of elements p, q, s, and β, where:

- p and q are prime numbers, $p \equiv 3 \ (\bmod \ 4)$, $q \equiv 3 \ (\bmod \ 4)$;
- $s \in Z$, $gh^3 \equiv 1 \ (\bmod \ pq)$;
- $\beta \in Z$, $\alpha\beta \equiv 1 \ (\bmod \ 1cm \ (p - 1, q - 1))$,
        and

generating a public key (n, g, h, k, 1, α) consisting of elements n, g, h, k, 1, and α (k is the bit length of pq) where:

- $\alpha, g, h, k, 1 \in Z \ (0 < g, h < n)$;
- $n = p^d q$ (where d is an odd number),

(b) encryption which the sender conducts by working the sender-end device, according to a procedure comprising:

selecting a random number r $(0 < r < 2^{k0})$ with regard to a plaintext m $(0 < m < 2^n)$;
calculating the following:

$$m_1 = m \parallel r$$

(where F: $\{0, 1\}^{n+k0} \rightarrow \{0, 1\}^1$ is a suitable random function, subject to $k = n + k_0 + 2$)
calculating a Jacobi symbol a = $(m_1/n)$ and the following equations:

$$C = m_1{}^{2\alpha} g^{F(m1)} \bmod n, \ D = h^{F(m1)} \bmod n$$

and
sending the ciphertext (C, D, a) to said receiver,

(c) decryption which said receiver conducts by working said receiver-end device, according to a procedure comprising:

calculating the following from the ciphertext (C, D, a), using said secrete key (p, q, s, β):

$$m_{1,p} = (CD^s)^{\frac{\beta(p+1)}{4}} \bmod p,$$

$$m_{1,q} = (CD^s)^{\frac{\beta(q+1)}{4}} \bmod q$$

finding x that fulfills conditions $(x/n) = a$ and $0 < x < 2^{k-2}$ from among $\phi\,(m_{1,p}, m_{1,q})$, $\phi\,(-m_{1,p}, m_{1,q})$, $\phi\,(m_{1,p}, -m_{1,q})$, $\phi\,(-m_{1,p}, -m_{1,q})$ and determining the x as $m'_1$ (where $\phi$ represents ring isomorphism mapping from $Z/(p) \times Z\,(q)$ to $Z/\,(pq)$ according to Chinese remainder theorem); and calculating the following:

$$m' = \begin{cases} [m'_1]^{k_0} & \text{if } (C, D) = (C', D') \\ * & \text{otherwise} \end{cases}$$

(where, C' and D' are obtained by:

$$C' = m'_1{}^{2\alpha}\, g^{F(m'1)} \bmod n, \quad D' = h^{F(m'1)} \bmod n$$

and $[a]''$ and $[a]_n$ represent upper n bits and lower n bits of the a, respectively. An asterisk (*) as the result of decryption denotes that decryption is unsuccessful.)
thereby obtaining the result of decryption.

**13.** The public-key encryption method as recited in claim 12, wherein:
said receiver works said receiver-end device to calculate the following:

$$C'_p = m'_1{}^{2\alpha}\, g^{F(m'1)} \bmod p^d \qquad C'_q = m'_1{}^{2\alpha}\, g^{F(m'1)} \bmod q$$

$$D'_p = h^{F(m'1)} \bmod p^d \qquad D'_q = h^{F(m'1)} \bmod q$$

and verify that (C, D) = (C', D'), pursuant to:

$$C \equiv C'_p \;(\bmod\; p^d)\; C \equiv C'q \;(\bmod\; q)$$

$$D \equiv D'_p \;(\bmod\; p^d)\; D \equiv D'_q \;(\bmod\; q)$$

**14.** A cryptographic communications system comprising a sender-end device and a receiver-end device, said sender-end device having means for encrypting data to send with a public key, said receiver-end device having means for decrypting said data encrypted and delivered thereto with a secret key corresponding to said public key, said cryptographic communications system arranged such that:
said receiver-end device is equipped with:

secrete key generating means for generating a secret key (p, q, s, β) consisting of elements p, q, s, and β, where:

- p and q are prime numbers, $p \equiv 3 \pmod 4$, $q \equiv 3 \pmod 4$;
- $s \in Z$, $gh^3 \equiv 1 \pmod{pq}$;
- $\beta \in Z$, $\alpha\beta \equiv 1 \pmod{\mathrm{lcm}\,(p - 1, q - 1)}$,
  and

public key generating means for generating a public key $(n, g, h, k, 1, \alpha)$ consisting of elements n, g, h, k, 1, and $\alpha$ (k is the bit length of pq) where:

- $\alpha, g, h, k, 1 \in Z$ $(0 < g, h < n)$;
- $n = p^d q$ (where d is an odd number),

said sender-end device is equipped with:
means for calculating the following equations with regard to a plaintext m $(0 < m < 2^{k-2})$ and a random number r $(0 \leqq r \leqq 1)$:

$$C = m^{2\alpha}g^r \bmod n, \quad D = h^r \bmod n$$

means for calculating a Jacobi symbol a = (m/n) and sending the ciphertext (C, D, a) to said receiver,
said receiver-end device is further equipped with:
means for calculating the following from the ciphertext (C, D, a), using said secrete key $(p, q, s, \beta)$

$$m_{1,p} = (CD^s)^{\frac{\beta(p+1)}{4}} \bmod p,$$

$$m_{1,q} = (CD^s)^{\frac{\beta(q+1)}{4}} \bmod q$$

and
means for finding one that fulfills conditions (x/n) = a and $0 < x < 2^{k-2}$ from amon $\phi\,(m_{1,p}, m_{1,q})$, $\phi\,(-m_{1,p}, m_{1,q})$, $\phi\,(m_{1,p}, -m_{1,q})$, $\phi\,(-m_{1,p}, -m_{1,q})$ (where $\phi$ represents ring isomorphism mapping from $Z/(p) \times Z\,(q)$ to Z/ (pq) according to Chinese remainder theorem) and outputting the one as the plaintext m.

15. A medium having a program stored thereto, said program to be loaded into both a sender-end computer which encrypts data to send with a public key and a receiver-end computer which decrypts said data once encrypted and delivered thereto with a secret key corresponding to said public key, said program comprising:

   (a) instructions making said receiver-end device perform a key generation step comprising:

   generating a secret key $(p, q, s, \beta)$ consisting of elements p, q, s, and $\beta$, where:.

   - p and q are prime numbers, $p \equiv 3 \pmod 4$, $q \equiv 3 \pmod 4$;
   - $s \in Z$, $gh^3 \equiv 1 \pmod{pq}$;
   - $\beta \in Z$, $\alpha\beta \equiv 1 \pmod{\mathrm{lcm}\,(p - 1, q - 1)}$,
     and

   generating a public key $(n, g, h, k, l, \alpha)$ consisting of elements n, g, h, k, l, and $\alpha$ (k is the bit length of pq) where:

   - $\alpha, g, h, k, l \in Z$ $(0 < g, h < n)$;
   - $n = p^d q$ (where d is an odd number),

   (b) instructions making said sender-end device perform encryption comprising:

calculating the following equations with regard to a plaintext m ($0 < m < 2^{k-2}$) and a random number r ($0 \leqq r \leqq 1$):

$$C = m^{2\alpha}g^r \bmod n, \quad D = h^r \bmod n$$

calculating a Jacobi symbol a = (m/n) and
sending the ciphertext (C, D, a) to said receiver,

(c) instructions making said receiver-end device perform decryption comprising:

calculating the following from the ciphertext (C, D, a), using said secrete key (p, q, s, β)

$$m_{1,p} = (CD^s)^{\frac{\beta(p+1)}{4}} \bmod p,$$

$$m_{1,q} = (CD^s)^{\frac{\beta(q+1)}{4}} \bmod q$$

and
finding one that fulfills conditions (x/n) = a and $0 < x < 2^{k-2}$ from among $\phi(m_{1,p}, m_{1,q})$, $\phi(-m_{1,p}, m_{1,q})$, $\phi(m_{1,p}, -m_{1,q})$, $\phi(-m_{1,p}, -m_{1,q})$ (where $\phi$ represents ring isomorphism mapping from Z/(p) $\times$ Z (q) to Z/ (pq) according to Chinese remainder theorem) and outputting the one as the plaintext m.

16. A sender-end device to be used in a cryptographic communications system in which data to send is encrypted with a public key corresponding to a secret key registered on a receiver-end device and the receiver-end device decrypts the data encrypted and delivered thereto, said sender-end device configured so as to be equipped with:

means for calculating the following equations with regard to a plaintext m ($0 < m < 2^{k-2}$) and a random number r ($0 \leqq r \leqq 1$):

$$C = m^{2\alpha}g^r \bmod n, \quad D = h^r \bmod n$$

through the use of a public key (n, g, h, k, l, $\alpha$) consisting of elements n, g, h, k, l, and $\alpha$ (k is the bit length of pq) where:

- $\alpha$, g, h, k, $1 \in$ Z ($0 < g, h < n$);
- n = $p^d q$ (where d is an odd number),

the public key corresponding to a secret key (p, q, s, β) consisting of elements p, q, s, and β, which has been generated by said receiver-end device, where:

- p and q are prime numbers, $p \equiv 3 \pmod 4$, $q \equiv 3 \pmod 4$;
- $s \in$ Z, $gh^3 \equiv 1 \pmod{pq}$;
- $\beta \in$ Z, $\alpha\beta \equiv 1 \pmod{1cm (p - 1, q - 1)}$,

means for calculating a Jacobi symbol a = (m/n) to compose a ciphertext (C, D, a); and
means for sending the ciphertext (C, D, a) to said receiver-end device.

17. A receiver-end device to be used in a cryptographic communications system in which said receiver-end device decrypts data encrypted with a public key by a sender-end device and delivered thereto, said public key corresponding to a secret key, said receiver-end device configured so as to be equipped with:

secrete key generating means for generating a secret key (p, q, s, β) consisting of elements p, q, s, and β, where:

- p and q are prime numbers, $p \equiv 3$ (mod 4), $q \equiv 3$ (mod 4);
- s E Z, $gh^3 \equiv 1$ (mod pq);
- $\beta \in Z$, $\alpha\beta \equiv 1$ (mod 1cm (p - 1, q - 1)),

public key generating means for generating a public key (n, g, h, k, 1, $\alpha$) consisting of elements n, g, h, k, l, and $\alpha$ (k is the bit length of pq) where:

- $\alpha$, g, h, k, l $\in$ Z (0 < g, h < n);
- $n = p^d q$ (where d is an odd number),

means for receiving a ciphertext (C, D, a) consisting of elements C, D, and a that said sender-end device has generated by calculating the following equations with regard to a plaintext m ($0 < m < 2^{k-2}$) and a random number r ($0 \leqq r \leqq 1$), using said public key (n, g, h, k, l, $\alpha$):

$$C = m^{2\alpha}g^{r} \bmod n, \quad D = h^{r} \bmod n$$

and by calculating a Jacobi symbol a = (m/n)
means for calculating the following from the ciphertext (C, D, a), using said secrete key (p, q, s, $\beta$):

$$m_{1,p} = (CD^{s})^{\frac{\beta(p+1)}{4}} \bmod p,$$

$$m_{1,q} = (CD^{s})^{\frac{\beta(q+1)}{4}} \bmod q$$

and
means for finding one that fulfills conditions (x/n) = a and $0 < x < 2^{k-2}$ from among $\phi$ ($m_{1,p}$, $m_{1,q}$), $\phi$ ($-m_{1,p}$, $m_{1,q}$), $\phi$ ($m_{1,p}$, $-m_{1,q}$), $\phi$ ($-m_{1,p}$, $-m_{1,q}$) (where $\phi$ represents ring isomorphism mapping from Z/(p) x Z/(q) to Z/ (pq) according to Chinese remainder theorem) and outputting the one as the plaintext m.

# FIG.1

**100 SENDER-SIDE DEVICE**

101 CPU

105 IC CARD READER/WRITER

106 DISPLAY

107 KEYBOARD

104

103 COMMUNICATION DEVICE

MEMORY 102

RANDOM-NUMBER GENERATING — 1001
EXPONENTIATING — 1002
MODULO ARITHMETIC — 1003
ENCRYPTING — 1004
APPLICATION A — 1005
ONE-WAY FUNCTION — 2008
PUBLIC DATA — 2006

1006 CIPHER-TEXT

300 COMMUNICATION LINE

PUBLIC DATA — 2006

**400 THIRD-PARTY'S DEVICE**

COMMUNICATION DEVICE 403

CPU — 401

404

PUBLIC DATA
2006

402 MEMORY

**200 RECEIVER-SIDE DEVICE**

203 COMMUNICATION DEVICE

205 IC CARD READER/WRITER

204

206 DISPLAY

207 KEYBOARD

201 CPU

MEMORY 202

KEY GENERATING — 2001
EXPONENTIATING — 2002
MODULO ARITHMETIC — 2003
DECRYPTING — 2004
APPLICATION B — 2005
PUBLIC DATA — 2006
PRIVATE DATA — 2007
ONE-WAY FUNCTION — 2008

# FIG.2

SENDER'S IC CARD

500

501 · CPU

502

| | |
|---|---|
| KEY GENERATING | 5001 |
| EXPONENTIATING | 5002 |
| MODULO ARITHMETIC | 5003 |
| ENCRYPTING | 5004 |
| ONE-WAY FUNCTION | 5008 |
| PUBLIC DATA | 2006 |

I/O

503      504

# FIG.3

| | Encryption | Decryption | IND-CCA2 |
|---|---|---|---|
| RSA | Approx. 2~1500 | Approx. 400 | No |
| ElGamal's Cryptosystem | Approx. 3000 | Approx. 1500 | No |
| Elliptic Curve Cryptosystem | Approx. 120 | Approx. 60 | No |
| OAEP | Approx. 2~1500 | Approx. 400 | Yes |
| Method of the Invention | Approx. 400 (3) | Approx. 65 | Yes |

## INTERNATIONAL SEARCH REPORT

| International application No. |
|---|
| PCT/JP00/00475 |

**A. CLASSIFICATION OF SUBJECT MATTER**
$Int.Cl^7$
     H04L 9/30      H04L 9/08      G09C 1/00

According to International Patent Classification (IPC) or to both national classification and IPC

**B. FIELDS SEARCHED**

Minimum documentation searched (classification system followed by classification symbols)
$Int.Cl^7$
     G09C 1/00 - 5/00      H04K 1/00 - 3/00
     H04L 0/00 - 9/38

Documentation searched other than minimum documentation to the extent that such documents are included in the fields searched

Electronic data base consulted during the international search (name of data base and, where practicable, search terms used)
     JICST(JOIS)
     INSPEC(DIALOG)

**C. DOCUMENTS CONSIDERED TO BE RELEVANT**

| Category* | Citation of document, with indication, where appropriate, of the relevant passages | Relevant to claim No. |
|---|---|---|
| T | Genji Nishioka, "Efficient and Security-provable Public-Key Cryptosystem", Research report, Information Processing Society of Japan, Vol.99, No.24, (05 March, 1999),pp. 25-30 | 1-17 |
| A | T. Okamoto and S. Uchiyama, "A New Public-Key Cryptosystem as Secure as Factoring, "Lecture Notes in Computer Science, Vol.1403, (1998), pp.308-318 | 1-17 |
| A | Y. Zheng and J. Seberry, "Practical Approaches to Attaining Security against Adaptively Chosen Ciphertext Attacks," Lecture Notes in Computer Science, Vol.740, (1993), pp.292-304 | 1-17 |
| A | M. Bellare and P. Rogaway, "Optimal Asymmetric Encryption," Lecture Notes in Computer Science, Vol.950, (1995), pp.92-111 | 1-17 |
| A | M. Bellare and P. Rogaway, "Minimizing the Use of Random Oracles in Authenticated Encryption Schemes, "Lecture Notes in Computer Science, Vol.1334, (1997), pp.1-16 | 1-17 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure. use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 April, 2000 (10.04.00) | 25 April, 2000 (25.04.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
|---|
| PCT/JP00/00475 |

C (Continuation). DOCUMENTS CONSIDERED TO BE RELEVANT

| Category* | Citation of document, with indication, where appropriate, of the relevant passages | Relevant to claim No. |
|---|---|---|
| A | S. Mueller, "On the Security of an RSA Based Encryption Scheme," Lecture Notes in Computer Science, Vol.1587, (1999), pp.135-148 | 1-17 |
| A | T. Takagi,"Fast RSA-Type Cryptosystem Modulo pkq," Lecuture Notes in Computer Science, Vol.1462, (1998), pp.318-326 | 1-17 |

Form PCT/ISA/210 (continuation of second sheet) (July 1992)

30